(19)

Europäisches
Patentamt
European
Patent Office
Office européen
des brevets

(11) **EP 4 050 377 B1**

(12) **EUROPEAN PATENT SPECIFICATION**

(45) Date of publication and mention
of the grant of the patent:
**06.08.2025 Bulletin 2025/32**

(21) Application number: **20926329.2**

(22) Date of filing: **16.03.2020**

(51) International Patent Classification (IPC):
***G01S 17/08*** *(2006.01)*     ***G01S 17/894*** *(2020.01)*
***G01S 7/481*** *(2006.01)*     ***G01S 7/497*** *(2006.01)*

(52) Cooperative Patent Classification (CPC):
**G01S 17/894; G01S 7/4816; G01S 7/497;
G01S 17/48**

(86) International application number:
**PCT/CN2020/079471**

(87) International publication number:
**WO 2021/184155 (23.09.2021 Gazette 2021/38)**

(54) **THREE-DIMENSIONAL IMAGE SENSING SYSTEM AND RELATED ELECTRONIC DEVICE, AND TIME-OF-FLIGHT RANGING METHOD**

SYSTEM ZUR ERFASSUNG DREIDIMENSIONALER BILDER UND ZUGEHÖRIGE ELEKTRONISCHE VORRICHTUNG UND FLUGZEITABSTANDSMESSUNGSVERFAHREN

SYSTÈME DE DÉTECTION D'IMAGE TRIDIMENSIONNELLE ET DISPOSITIF ÉLECTRONIQUE ASSOCIÉ, ET PROCÉDÉ DE TÉLÉMÉTRIE À TEMPS DE VOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.08.2022 Bulletin 2022/35**

(73) Proprietor: **SHENZHEN GOODIX TECHNOLOGY
CO., LTD.
Shenzhen, Guangdong 518045 (CN)**

(72) Inventors:
• **LI, Chung-Te
Shenzhen, Guangdong 518045 (CN)**

• **WANG, Hao-Jen
Shenzhen, Guangdong 518045 (CN)**

(74) Representative: **Padial Martinez, Ana Belen
Baylos 5.0 Legal Advisors S.L.
Av. Diagonal 435, 1.1
08008 Barcelona (ES)**

(56) References cited:
EP-A2- 3 015 881         CN-A- 102 547 355
CN-A- 105 572 681        CN-A- 107 430 187
CN-A- 108 537 836        CN-A- 109 474 771
DE-T5- 112017 007 344    US-A1- 2017 097 417
US-A1- 2019 082 130      US-A1- 2019 339 369

**Description**

**TECHNICAL** FIELD

The present application relates to an image sensing system, particularly a three-dimensional image sensing system and a related electronic device and time-of-flight (ToF) ranging method.

BACKGROUND

CMOS image sensors have been mass produced and widely used. Conventional image sensors can generate two-dimensional (2D) images and videos. Recently, image sensors and systems that can generate three-dimensional (3D) images have received a lot of attention, and these 3D image sensors can be used in facial recognition, augmented reality (AR)/virtual reality (VR), drones, etc.

There are three main implementations of existing 3D image sensors: stereo binocular, structured light, and ToF.

ToF is accomplished by using specially designed pixels to measure the round-trip time of flight for photons. In order to increase the accuracy of modeling and reduce costs, how to improve the accuracy of ToF sensors has become an important task. Examples for such sensors can be found in DE112017007344, US2019339369 or EP3015881.

SUMMARY

One purpose of the present disclosure is to disclose an image sensing system, in particular, a 3D image sensing system and aa related electronic device and ToF ranging method, to adress the above -mentioned issue.

One embodiment of the present disclosure discloses a 3D image sensing system, which includes the technical features set out in claim 1.

One embodiment of the present disclosure discloses an electronic device. The electronic device includes the above-mentioned 3D image sensing system.

One embodiment of the present disclosure discloses a ToF ranging method, which includes the technical features of claim 8.

The processing unit of the 3D image sensing system disclosed in the present disclosure is capable of compensating the global offset of the ToF distance, and the error between the measured ToF distance after being compensated for the global offset and the true depth is reduced. Therefore, the ToF distance after being compensated for the global offset can more accurately reflect the true depth, thereby improving the accuracy of image sensing.

**BRIEF DESCRIPTION OF THE DRAWINGS**

FIG. 1 is a schematic block diagram illustrating a 3D image sensing system according to one embodiment of the present disclosure.

FIG. 2 is a schematic diagram of the optic path of the 3D image sensing system shown in FIG. 1.

FIG. 3 is a schematic cross-sectional diagram of a phase detection pixel pair of the 3D image sensing system shown in FIG. 1, which illustrates the operation of using the phase detection pixel pair to perform phase focusing to obtain a disparity associated with a target point.

FIG. 4 is a schematic diagram of an image established on the basis of the sensed values of the photosensitive array of the photosensitive module of the 3D image sensing system when the number of target points providing the reflected light is one.

FIG. 5 is a schematic diagram of an image established on the basis of the sensed values of the photosensitive array when the number of target points providing the reflected light is two.

FIG. 6 is a schematic diagram illustrating the 3D image sensing system shown in FIG. 1 applied in an electronic device according to one embodiment of the present disclosure.

# DETAILED DESCRIPTION

The following disclosure provides many different embodiments or examples for implementing different features of the present disclosure. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact and may also include embodiments in which additional features may be formed between the first and second features, such that the first and second features may not be in direct contact. In addition, the present disclosure may repeat reference numerals and/or letters in the various embodiments. This repetition is for the purpose of simplicity and clarity and does not in itself dictate a relationship between the various embodiments and/or configurations discussed.

Further, spatially relative terms, such as "beneath, " "below, " "lower, " "above, " "upper, " and the like, may be used herein for ease of description to discuss one element or feature's relationship to another element(s) or feature(s) as illustrated in the drawings. These spatially relative terms are intended to encompass different orientations of the device in use or operation in addition to the orientation depicted in the drawings. The apparatus may be otherwise oriented (e.g., rotated by 90 degrees or at other orientations), and the spatially relative descriptors used herein may likewise be interpreted accordingly.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in the respective testing measurements. Also, as used herein, the term "the same" generally means within 10%, 5%, 1%, or 0.5% of a given value or range. Alternatively, the term "the same" means within an acceptable standard error of the mean when considered by one of ordinary skill in the art. As could be appreciated, other than in the operating/working examples, or unless otherwise expressly specified, all of the numerical ranges, amounts, values, and percentages (such as those for quantities of materials, duration of times, temperatures, operating conditions, portions of amounts, and the likes) disclosed herein should be understood as modified in all instances by the term "the same." Accordingly, unless indicated to the contrary, the numerical parameters set forth in the present disclosure and attached claims are approximations that can vary as desired. At the very least, each numerical parameter should at least be construed in light of the number of reported significant digits and by applying ordinary rounding techniques. Here, ranges can be expressed herein as from one endpoint to another endpoint or between two endpoints. All ranges disclosed herein are inclusive of the endpoints, unless specified otherwise.

There are three main implementations of existing 3D image sensors: stereo binocular, structured light, and ToF (ToF). Generally, in the implementation of ToF, a sensor is used to measure the round-trip time of flight for photons, thereby obtaining the ToF.

However, the ToF distance obtained by a sensor is often influenced by the physical characteristics of the sensor's electronic components. For example, when the temperature of the operating environment in which the sensor is located changes, the physical characteristics of the sensor's electronics may change, causing the ToF distance to have a global offset. By global offset, it means that the measured depths (ToF distances) of targets with different depths (i.e., different distances relative to the sensor) have the same offset relative to their respective true depths in the same operating environment. The global offsets induced by different values of certain parameters of the operating environment, e.g., at different temperatures, are also different. Therefore, the accuracy of the sensor can be improved if the global offset can be deducted from the ToF distance.

The way to calculate the distance from the disparity obtained by phase detection auto focus (PDAF) is based on the triangulation principle, which is not affected by temperature. Therefore, the 3D image sensing system of the present disclosure uses phase focusing to eliminate the global offset of the ToF distance, so that the ToF distance after eliminating the global offset can accurately reflect the true depth, thereby improving the accuracy of image sensing, the details of which are described as follows.

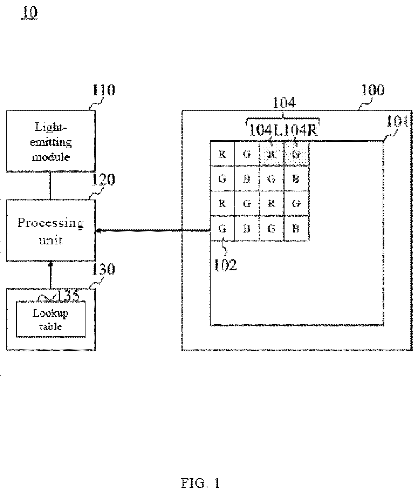

FIG. 1 is a schematic block diagram illustrating a 3D image sensing system 10 according to one embodiment of the present disclosure. Reference is made to FIG. 1, wherein the 3D image sensing system 10 includes a photosensitive module 100, a light-emitting module 110, a processing unit 120 and a storage device 130.

The photosensitive module 100 includes a photosensitive array 101. The photosensitive array 101 are formed of plurality of pixela 102; for the sake of brevity, only a portion of the pixels 102 is illustrated. The pixel 102 为 photoelectric components. The pixel 102 is configured to converted the receive optical signals into electirc signals. The pixel 102 may be a red pixel (R), green pixel (G), or blue pixel (B). Further, a portion of the pixels 102 forms at least one phase detection pixel pair 104, which includes the right-shielded phase detection pixel 104R (shown in shadowed lines) and the left-shielded phase detection pixel 104L (shown in shadowed lines). In the present embodiment, the green pixel G is used as the right-shielded phase detection pixel 104R and the red pixel R is used as the left-shielded phase detection pixel 104L. However, the present disclosure is not limited thereto. The phase detection pixel pair 104 is configured to provide a disparity for eliminating the global offset of the ToF distance, the details are described below.

The processing unit 120 is coupled to the light-emitting module 110, the photosensitive module 100 and the storage device 130. The processing unit 120 is configured to receive a sensed value provided by the photosensitive module 100 and access the lookup table 135 stored in the storage device 130, wherein the lookup table 135 is created in advance on the basis of the principle of triangulation . Further, the information in the lookup table 135 is built during the test operation before the 3D image sensing system 10 is shipped. In other words, the lookup table 135 is built before the 3D image sensing system 10 before it is shipped. In certain embodiments, the processing unit 120 includes a microcontroller unit( MCU), a central processing unit (CPU) or a graphics processing unit (GPU).

During the ranging operation after shipping, the processing unit 120 controls the photosensitive module 100 and the light-emitting module 110 to perform ToF ranging to generate the depth information of a target object and uses the information stored in the lookup table 135 to correct the depth, so that the corrected depth can accurately reflect the true depth, the details are described below.

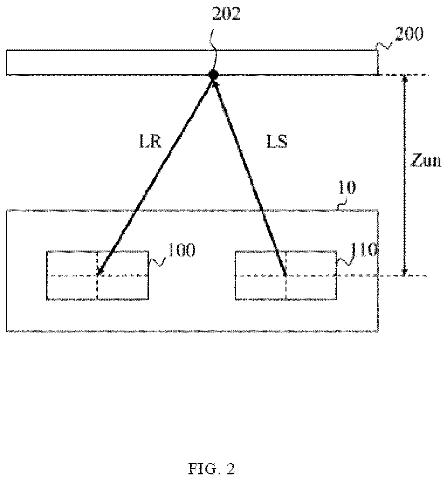

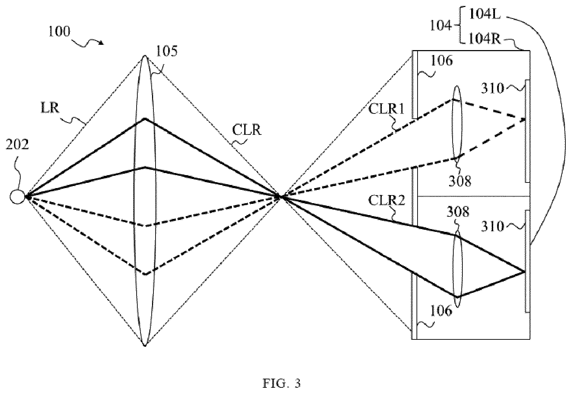

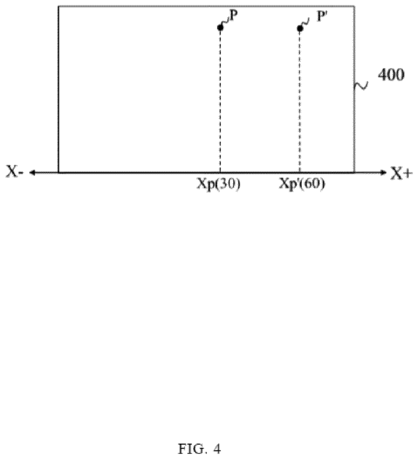

Specifically, the ranging operation performed by the 3D image sensing system 10 after shipping includes a conventional ToF ranging operation, disparity evaluation operation and compensation operation, executed sequentially. The operation of the conventional ToF ranging is discussed with reference to the embodiment of FIG. 2, whereas the disparity evaluation operation and the compensation operation are discussed with reference to the embodiments of FIG. 3 and FIG. 4.

FIG. 2 is a schematic diagram of the optic path of the 3D image sensing system 10 shown in FIG. 1, which illustrates the conventional ToF ranging operation, wherein the optic path shown in FIG. 2 is applicable in non-phase detection pixels or phase detection pixels (i.e., the right-shielded phase detection pixel 104R and the left-shielded phase detection pixel 104L). for the sake of brevity, the processing unit 120 and the storage device 130 of FIG. 1 are not shown.

Referring to FIG. 2, the target object 200 is placed at a unknown distance Zun from the 3D image sensing system 10. It should be noted that the dimensions of the objects in FIG. 2 are magnified for illustrative purpose. Thus, the unknown distance Zun may also be considered to be the distance between the target object 200 and the light-emitting module 110 or the photosensitive module 100; that is, the distance between the target object 200 and the 3D image sensing system 10.

In the embodiment of FIG. 2, the number of target points 202 is one, and therefore the number of reflected light LRs is one. However, in the embodiment of FIG. 2, the example of a single target point is used for ease of description only. The case of a single target point can be applied to ranging, for example as a proximity sensor for a cell phone terminal. In the present embodiment, the target point may also be multiple, such as for 3D imaging of a human face.

First, a conventional ToF ranging operation is performed. In the conventional ToF ranging operation, the light-emitting module 110 emits incident light LS to the target object 200. The photosensitive array 101 of the photosensitive module 100 receives the reflected light LR of the incident light LS upon being reflected by the target object 200, and in the present embodiment, the incident light LS is reflected from the target point 202 of the target object 200 to form the reflected light LR. In the implementation of the conventional ToF ranging operation, the processing unit 120 performs ToF ranging on the basis of the time-of-flight of the incident light LS and the reflected light LR to obtain a first distance corresponding to the target point 202. For illustration purposes, in the present embodiment, the surface of the target object 200 facing the 3D image sensing system 10 is flat. Thus, the distance between the target point 202 and the 3D image sensing system 10 is substantially the same as the distance between the target object 200 and the 3D image sensing system 10. However, the present disclosure is not limited to a flat surface.

As discussed above, the first distance measured in accordance with the conventional ToF ranging operation has a global offset. After compensating the first distance for the global offset, it is possible to obtain a first distance without the global offset or without the effect of the global offset; i.e., the first distance is corrected to obtain a distance closer to the true distance. The present disclosure determines an estimation value of the global offset (i.e. a global compensation coefficient) to compensate for the global offset, which can be expressed in the following Equation (1):

$$Z = Z_{\mathrm{ToF}} + C \qquad\qquad \text{Equation (1)}$$

where Z represents the compensated sensed distance; $Z_{\mathrm{ToF}}$ represents the first distance; and C represents the global compensation coefficient.

It should be noted that, in fact, because the 3D image sensing system 10 may still have errors other than the global offset, the compensated sensed distance Z may still not be equal to the unknown distance Zun (i.e., the distance or depth information obtained from the measurement still has some error with the true distance), but eliminating the global offset alone can already significantly improve the accuracy of performing ToF ranging using the 3D image sensing system 10.

After completing the conventional ToF ranging operation to obtain the first distance, the processing unit then performs a disparity evaluation operation to obtain the disparity associated with the target point 202. The present disclosure further provides methods for evaluating the disparity. Specifically, the present disclosure evaluates the disparity using phase focusing, the details of which are described below.

FIG. 3 is a schematic cross-sectional diagram of the phase detection pixel pair 104 shown in FIG. 1, which illustrates the operation of using the phase detection pixel pair 104 to perform phase focusing to obtain a disparity associated with a target point 202. In this embodiment, in continuation of the embodiment of FIG. 2, the number of reflected light LR provided by the target point 202 is one, but the light may diverge during transmission, so for example four are illustrated in FIG. 3. Referring to FIG. 3, which further discloses that the photosensitive module 100 further includes a condenser lens 105 for condensing the diverging reflected light LRs.

Furthermore, the right-shielded phase detection pixel 104R and the left-shielded phase detection pixel 104L of the phase detection pixel pair 104 differ in structure from non-phase detection pixels at least in that the right-shielded phase detection pixel 104R and the left-shielded phase detection pixel 104L are provided with a photomask 106 for masking part of the light, details of which are illustrated below. It should be noted that FIG. 3 only shows one of the structures for implementing the phase detection pixels, and the present disclosure is not limited thereto; the present disclosure may also be applied to phase detection pixels having other structures.

During operation, the condenser lens 105 receives the reflected light LR and is configured to focus the reflected lights LR into focused reflected light CLR. The focused reflected light CLR then travels toward the right-shielded phase detection pixel 104R and the left-shielded phase detection pixel 104L. The photomask 106 of the right-shielded phase detection pixel 104R blocks the portion of light illuminating the right side of the right-shielded phase detection pixel 104R and allows the first focused reflected light CLR1 of the focused reflected light CLR to enter the right-shielded phase detection pixel 104R, so that the right-shielded phase detection pixel 104R receives the first focused reflected light CLR1 of the focused reflected light CLR.

In operation, the focusing lens 105 receives the reflected light LR and is used to focus the reflected light LR into the focused reflected light CLR, which then travels toward the right shielded phase detection pixel 104R and the left shielded phase detection pixel 104L. The photomask 106 of the right-shielded phase detection pixel 104R blocks the portion of light shining to the right of the right-shielded phase detection pixel 104R and allows the first focused reflected light CLR1 of the focused reflected light CLR to enter the right-shielded phase detection pixel 104R so that the right-shielded phase detection pixel 104R receives the first focused reflected light CLR1 of the focused reflected light CLR. It should be noted that since FIG. 3 is exaggerated, the portion of the photomask 106 of the right shield phase detection pixel 104R near the junction of the right-shielded phase detection pixel 104R and the left-shielded phase detection pixel 104L may be considered negligible. In other words, the photomask 106 of the right-shielded phase detection pixel 104R ideally does not block the light from the left side of the the right-shielded phase detection pixel 104R. Then, the first focused reflected light CLR1 passes through the lens 308 of the right-shielded phase detection pixel 104R and is received by the photosensitive element 310 of the right-shielded phase detection pixel 104R, which may be referred to as the first photosensitive element 310 for ease of differentiation. In this embodiment, the non-phase sensing pixel is substantially identical in structure, function, or characteristics to the photosensitive element 310 of the phase sensing pixel.

Similarly, the left-shielded phase detection pixel 104L receives the second focused reflected light CLR2 of the focused reflected light CLR. Next, the second focused reflected light CLR2 is received by the photosensitive element 310 of the left-shielded phase detection pixel 104L (which may be referred to as the second photosensitive element 310) after passing through the lens 308 of the left-shielded phase detection pixel 104L. The process that passing the second focused reflected light CLR2 propagates within the left-shielded phase detection pixel 104L is similar to the process that the first focused reflected light CLR1 propagates within the right-shielded phase detection pixel 104R and will not be described herein.

The transmission path of the reflected light LR received by the non-phase detection pixel is similar to that of the left-shielded phase detection pixel 104L and the right-shielded phase detection pixel 104R described above, except that the focused reflected light received by the non-phase detection pixel is not shielded by the photomask 106.

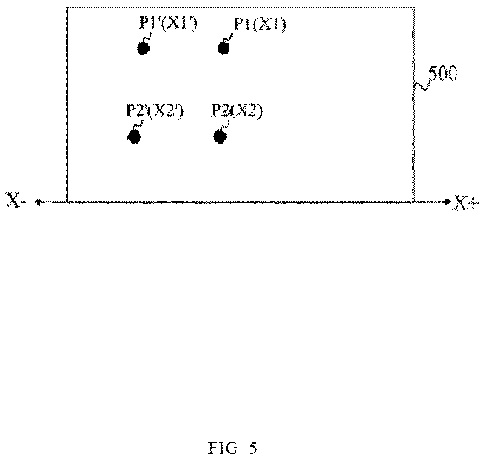

The processing unit 120 establishes an image on the basis of the sensed values provided by all pixels 102 of the photosensitive array 101, for example, as in image 400 of FIG. 4 or image 500 of FIG. 5.

FIG. 4 is a schematic diagram of an image 400 established on the basis of the sensed values of all the pixels 102 in the photosensitive array 101 when the number of target points providing the reflected light LR is one. For ease of understanding, it is assumed that the edges of the field of view of all pixels 102 are exactly aligned with the edges of the target object 200. That is, each pixel 102 is capable of receiving reflected light. In the present embodiment, because the number of reflected light LR is one, only the target point 202 provides reflected light LR to the right-shielded phase detection pixel 104R and the left-shielded phase detection pixel 104L, and the target point 202 provides reflected light LR at an angle such that the reflected light LR can only enter the right-shielded phase detection pixel 104R and the left-shielded phase detection pixel 104L. Accordingly, the right-shielded phase detection pixel 104R and the left-shielded phase detection pixel 104L have sensed values greater than zero, while the remaining pixels have sensed values of substantially zero. For simplicity of illustration, patterns with sensed values greater than zero are shown in black, while patterns with sensed values equal to zero are shown in white.

Referring to FIG. 4, a single target point 202 is presented in the image 400 as two patterns, i.e., patterns P and P'.

By way of example, the pattern P is established by sensed values on the basis of the right-shielded phase detection pixel 104R provided in response to the first focused reflected light CLR1, whereas the pattern P' is established by sensed values on the basis of the left-shielded phase detection pixel 104L provided in response to the second focused reflected light CLR2.

The processing unit 120 may estimate the disparity associated with the target point 202 by constructing a coordinate system for the image 400. To better understand the spirit of the present invention, in the embodiment of FIG. 4, only a single coordinate axis is constructed for the image 400, as shown in the coordinate axis (X+, X-). However, the present disclosure is not limited thereto. In other embodiments, a coordinate system having multiple axes may be constructed for the image.

After the coordinate system is constructed, coordinates Xp and Xp' of patterns P and P' in the image 400 can be obtained, with coordinates Xp and Xp' being, for example, 30 and 60, respectively, labeled Xp(30) and Xp'(60), respectively, in FIG. 4. The processing unit 120 obtains the disparity associated with the target point 202 by subtracting the coordinates Xp and Xp'. That is, the difference between the coordinates Xp and Xp' is the disparity associated with the target point 202. In this example, the disparity is 30.

After completing the disparity evaluation operation to obtain the disparity associated with the target point 202, the processing unit 120 then performs a compensation operation for the first distance $Z_{ToF}$, in which the lookup table 135 created before shipping is used to compensate for the first distance $Z_{ToF}$ obtained during a conventional ToF ranging operation after shipping, the details of which are described below.

The methods for calculating the global compensation factor C for compensating the first distance $Z_{ToF}$ according to the present disclosure will be described below. As discussed above, the look-up table 135 is built on the basis of the principle of triangulation . Further, the distances provided by the lookup table 135 are obtained on the basis of the the principle of triangulation and are therefore not affected by temperature. Accordingly, there is no global offset in the distances provided by the lookup table 135. In other words, the distance provided by the lookup table 135 can be considered as the compensated sensed distance Z in Equation (1), so that the global compensation factor C can be estimated by comparing the distance provided by the lookup table 135 with the first distance $Z_{ToF}$.

<Embodiment 1>

In Embodiment 1, the implementation of the lookup table 135 is shown in Table 1 below. In general, referring to Table 1, the lookup table 135 includes a plurality of preset disparitys D1 to Dn and a plurality of output distances Z1 to Zn, in this embodiment, specifically described with n = 3. The lookup table 135 includes a plurality of pre-determined disparitys D1 to D3 and a plurality of output distances Z1 to Z3. The preset disparity D1 corresponds to the output distance Z1, the preset disparity D2 corresponds to the output distance Z2, and so on.

Before the 3D image sensing system 10 is shipped, the output distance Z1 is obtained by applying the triangulation principle to the preset disparity D1. Similarly, the output distance Z2 is obtained by applying the triangulation principle to the preset disparity D2, and so on. After obtaining the output distances for each preset disparity, a look-up table 135 as shown in Table 1 is created according to a plurality of preset disparitys D1 to D3 and a plurality of output distances Z1 to Z3. It should be noted that the values of other parameters to be used in the triangulation principle, such as the values of the baseline and the values of the focal length, can be obtained or evaluated at the design stage (i.e., before the 3D image sensing system 10 is shipped), i.e., they are known.

[Table 0001]

Table 1

| Pre-Determined Disparity | Output Distance |
| --- | --- |
| D1 | Z1 |
| D2 | Z2 |
| D3 | Z3 |

Typically, the disparity calculated by the processing unit 120 (e.g., the disparity calculated for the target point 202) will not be exactly equal to any of the preset disparitys. In this case, the processing unit 120 is also used to select one of the pre-determined disparitys D1, D2, or D3 from the lookup table 135 according to the calculated disparity. One possible way of selection is to determine which of the multiple pre-determined disparitys D1 to D3 has the smallest difference with respect to the calculated disparity. For example, the calculated disparity has the smallest difference from the pre-determined disparity D1. Accordingly, the processing unit 120 selects the pre-determined disparity D1. Next, the processing unit 120 causes the lookup table 135 to provide an output distance Z1 corresponding to the pre-determined disparity D1, and treats the output distance Z1 as a second distance based on the selection. Then, the global compensation factor C is solved by substituting the second distance in the term (Z) in Equation (1).

Briefly, the processing unit 120 uses the calculated disparity to index lookup table 135 to obtain the second distance, and then calculates a global compensation factor C on the basis of the first distance $Z_{ToF}$ and said second distance. Finally, the processing unit 120 compensates the global offset on the basis of the calculated global compensation factor C; that is, by simply adding the measured first distance $Z_{ToF}$ with the calculated global compensation factor C to obtain the compensated sensed distance Z.

<Embodiment 2>

In Embodiment 2, the lookup table 135 is further built taking into account the case where the condenser lens 105 is a zoom lens, i.e., the position of the condenser lens 105 can be moved. Thus, in comparison to Embodiment 1, in Embodiment 2, the ranging operation performed by the 3D image sensing system 10 after shipped further includes an evaluation operation of the position information to evaluate the operation of the condenser lens 105. The processing unit 120 then obtains the second distance according to the evaluated disparity and the evaluated position of the condenser lens 105, as shown in Table 2 below. Referring to Table 2, the lookup table 135 of Table 2 is similar to the lookup table of Table 1, except that the lookup table 135 of Table 2 further includes a plurality of pre-determined position information O1 to O3 of the condenser lens 105. The pre-determined disparity D1 and pre-determined position information O1 together correspond to the output distance Z1, the pre-determined disparity D2 and the pre-determined position information O1 together correspond to the output distance Z2, and so on. The way to build the lookup table 135 is described as follows.

Before the 3D image sensing system 10 is shipped, the output distance Z1 is obtained by applying the principle of triangulation to the pre-determined disparity D1 and the pre-determined position information O1. Similarly, the output distance Z2 is obtained by applying the principle of triangulation to the pre-determined disparity D2 and the pre-determined position information O1, and so on. After obtaining the output distance for each pre-determined disparity and its corresponding pre-determined position information, the lookup table 135 of Table 2 is created according to the plurality of pre-determined disparitys D1 to D3, the plurality of pre-determined position information O1 to O3, and the plurality of output distances Z1 to Z3.

Table 2

| | | Pre-Determined Location Information | | |
|---|---|---|---|---|
| | | O1 | O2 | O3 |
| Pre-Determined Disparity | D1 | Z1 | Z4 | Z7 |
| | D2 | Z2 | Z5 | Z8 |
| | D3 | Z3 | Z6 | Z9 |

Typically, the evaluated position information of the condenser lens 105 evaluated by the processing unit 120 will not be equal to any of the pre-determined position information. Therefore, the processing unit 120 is also used to select the pre-determined position information O1, O2 or O3 according to the evaluated position information of the condenser lens 105. One possible way of selection is to determine which of the plurality of pre-determined position information O1 to O3 has the smallest difference with respect to the evaluated position information. By way of example, the pre-determined position information O1 has the smallest difference with the evaluated position information. Accordingly, the processing unit 120 selects the pre-determined position information O1, and then, for example, selects the preset disparity D1 in the same manner as in Example 1. The processing unit 120 causes lookup table 135 to provide the output distance Z1 corresponding to both the pre-determined disparity D1 and the pre-determined position information O1, and treats the output distance Z1 as a second distance according to the above two selections. Then, the global compensation factor C is solved by substituting the second distance into the term (Z) in Equation (1).

FIG. 5 is a schematic diagram of an image 500 established on the basis of the sensed values of the photosensitive array 101 when the number of target points providing the reflected light LR is two. The image 500 is created in the same manner as the image 400 of FIG. 4 and will not be described herein. The image 500 includes a plurality of patterns, such as P1, P2, P1' and P2'. In some possible embodiments, t the right-shielded phase detection pixel 104R and the left-shielded phase detection pixel 104L are positioned along the X-axis, so the patterns corresponding to the same target point are shifted on the X-axis, according to which it can be determined that patterns P1 and P1' correspond to the same target point and patterns P2 and P2' correspond to the same other target point. Similar to the operation described in the embodiment of FIG. 4, a first disparity is obtained on the basis of the patterns P1 and P1'. The first second distance is obtained by indexing the lookup table 135 (e.g. Table 1) on the basis of the first disparity. In the same way, a second disparity is obtained on the basis of the patterns P2 and P2'. The second second distance is obtained by indexing the lookup table 135 (e.g., Table 1) on the basis of the second disparity. Next, the two second distances are averaged. The averaged second distance is considered to be the second distance represented by the term (Z) in Equation (1). In addition, two first distances $Z_{ToF}$ are obtained on the basis of two reflected light LR and two incident light LS. Then the two first distances $Z_{ToF}$ are averaged. The averaged first distance Z ToF is considered to be the first distance represented by the term ($Z_{ToF}$) of Equation (1). As a result, a global compensation factor C is obtained.

In the foregoing embodiments of the present invention, a photomask is used to implement the optical element. In this implementation, a portion of light is blocked. However, the present disclosure is not limited thereto. In some embodiments, it is possible to obtain light similar to the first focused reflected light CLR1 and the second focused reflected light CLR2 of the foregoing embodiments without blocking the light. For example, it is possible to implement the optical element with a microlens. Simply put, the microlens divides one focused reflected light into two focused reflected lights. The operation to obtain the disparity of the two focused reflections after splitting is the same as the first focused reflection CLR1 and the second focused reflection CLR2 in the foregoing examples, and will not be described here.

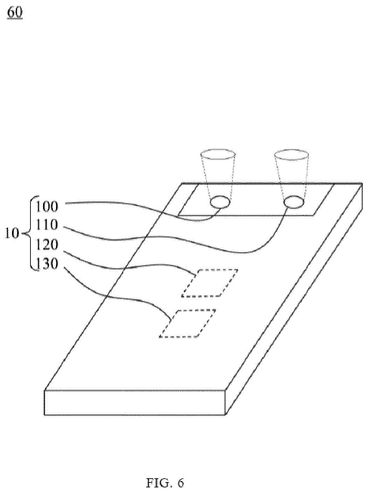

FIG. 6 is a schematic diagram illustrating the 3D image sensing system 10 shown in FIG. 1 applied in an electronic device 60 according to one embodiment of the present disclosure. Referring to FIG. 6, the electronic device 60 may be any electronic device such as, for example, a smart phone, a personal digital assistant, a handheld computer system, or a tablet computer.

The foregoing outlines features of several embodiments of the present application so that persons having ordinary skill in the art may better understand the various aspects of the present disclosure. Persons having ordinary skill in the art should appreciate that they may readily use the present disclosure as a basis for designing or modifying other processes and structures for carrying out the same purposes and/or achieving the same advantages of the embodiments introduced herein.

**Claims**

1. A three-dimensional (3D) image sensing system (10), comprising:

   a light-emitting module (110), configured to emit incident light (LS) to a target object (200); and
   a photosensitive module (100), configured to receive reflected light (LR) of the incident light (LS) upon being reflected by the target object (200), wherein the photosensitive module (100) comprises:

   a condenser lens (105), configured to focus the reflected light (LR) into focused reflected light (CLR); and
   a photosensitive array (101), comprising:

   a first photosensitive element (310), configured to receive first focused reflected light (CLR1) of the focused reflected light (CLR); and
   a second photosensitive element (310), configured to receive second focused reflected light (CLR2) of the focused reflected light (CLR); and

   a processing unit (120), coupled to the photosensitive module (100) and configured to perform time-of-flight (ToF) ranging based on ToF of the incident light (LS) and ToF of the reflected light (LR) to obtain a first distance corresponding to the target object (200), wherein the first distance has a global offset, wherein,
   the processing unit (120) establishes an image on the basis of the first focused reflected light (CLR1) and the second focused reflected light (CLR2), estimates a disparity reflected by the first focused reflected light (CLR1) and the second focused reflected light (CLR2) in the image, and calculates a global compensation coefficient on the basis of the disparity to compensate the global offset,

   **characterized in that** the photosensitive array further comprising:
   a phase detection pixel pair (104), comprising:

   a right-shielded phase detection pixel (104R), comprising the first photosensitive element (310), wherein the right-shielded phase detection pixel (104R) is configured to shield light from the right side of the right-shielded phase detection pixel (104R), and allow the first focused reflected light (CLR1) to enter the right-shielded phase detection pixel (104R) and to be received by the first photosensitive element (310); and
   a left-shielded phase detection pixel (104L), comprising the second photosensitive element (310), wherein the left-shielded phase detection pixel (104L) is configured to shield light from the left side of the left-shielded phase detection pixel (104L), and allow the second focused reflected light (CLR2) to enter the left-shielded phase detection pixel (104L) and to be received by the second photosensitive element (310).

2. The 3D image sensing system (10) of claim 1, wherein the processing unit (120) calculates the global compensation coefficient on the basis of the disparity and the first distance.

3. The 3D image sensing system (10) of claim 2, further comprising:

   a lookup table (135), comprising: a first pre-determined disparity and a second pre-determined disparity, and a first output distance and a second output distance, wherein, the first output distance is obtained by applying the principle of triangulation on the first pre-determined disparity, and the second output distance is obtained by applying the principle of triangulation on the second pre-determined disparity, wherein the processing unit (120) further selects one of the first pre-determined disparity or the second pre-determined disparity from the lookup table (135) according to the disparity, and, considers said one of the first output distance or the second output distance as a second distance according to the selection.

4. The 3D image sensing system (10) of claim 2, further comprising:

   a lookup table (135), comprising: a first pre-determined position information and a second pre-determined position information of the condenser lens, a first pre-determined disparity and a second pre-determined disparity, and a first output distance and a second output distance, wherein the first output distance is obtained by applying the principle of triangulation on the first pre-determined position information and the first pre-determined disparity, and the second output distance is obtained by applying the principle of triangulation on the second pre-determined position information and the second pre-determined disparity, wherein, the processing unit (120) further selects one of the first pre-determined disparity or the second pre-determined disparity from the lookup table (135) according to an estimated position information of the disparity and the condenser lens, and selects one of the first pre-determined position information or the second pre-determined position information from the lookup table (135), and considers said one of the first output distance or the second output distance as a second distance according to the selection.

5. The 3D image sensing system (10) of claim 3 or 4, wherein the processing unit (120) further determines the global compensation coefficient on the basis of the first distance and the second distance.

6. The 3D image sensing system (10) of claim 1, wherein the processing unit (120) determines the disparity by constructing a coordinate system for the image.

7. An electronic device (60), comprising: a three-dimensional image sensing system of any of claims 1 to 6.

8. A time-of-flight (ToF) ranging method, comprising:

   emitting incident light (LS) to a target object (200);
   receiving reflected light (LR) of the incident light (LS) upon being reflected by the target object (200);
   using a condenser lens (105) to focus the reflected light (LR) into focused reflected;
   using a first photosensitive element (310) to receive first focused reflected light (CLR1) of the focused reflected light (CLR); and
   using a second photosensitive element (310) to receive second focused reflected light (CLR2) of the focused reflected light (CLR);
   performing ToF ranging based on ToF of the incident light (LS) and ToF of the reflected light (LR) to obtain a first distance corresponding to the target object (200), wherein the first distance has a global offset;
   establishing an image on the basis of the first focused reflected light (CLR1) and the second focused reflected light (CLR2);
   estimating a disparity reflected by the first focused reflected light (CLR1) and the second focused reflected light (CLR2) in the image; and
   calculating a global compensation coefficient on the basis of the disparity to compensate the global offset, **characterized in that**:

      wherein the first photosensitive element (310) is disposed in a right-shielded phase detection pixel (104R), and the second photosensitive element (310) is disposed in a left-shielded phase detection pixel (104L), wherein receiving the first focused reflected light (CLR1) of the focused reflected light (CLR) using the first photosensitive element (310) comprises:

using the right-shielded phase detection pixel (104R) to shield light from the right side of the right-shielded phase detection pixel (104R) to allow the first focused reflected light (CLR1) to enter the right-shielded phase detection pixel (104R), and using the first photosensitive element (310) to receive the first focused reflected light (CLR1);

wherein receiving the second focused reflected light (CLR2) of the focused reflected light (CLR) using the second photosensitive element (310) comprises:

using the left-shielded phase detection pixel (104L) to shield light from the left side of the left-shielded phase detection pixel (104L) to allow the second focused reflected light (CLR2) to enter the left-shielded phase detection pixel (104L), and using the second photosensitive element (310) to receive the second focused reflected light (CLR2).

9. The method of claim 8, wherein calculating the global compensation coefficient on the basis of the disparity comprises: calculating the global compensation coefficient on the basis of the disparity and the first distance.

10. The method of claim 9, further comprising:

selecting one of a first pre-determined disparity or a second pre-determined disparity from a lookup table (135) according to the disparity, wherein the lookup table (135) comprises: the first pre-determined disparity and the second pre-determined disparity, and a first output distance and a second output distance, wherein the first output distance is obtained by applying the principle of triangulation on the first pre-determined disparity, and the second output distance is obtained by applying the principle of triangulation on the second pre-determined disparity; and considering said one of the first output distance or the second output distance as a second distance according to the selection.

11. The method of claim 9, wherein,

selecting one of a first pre-determined disparity or a second pre-determined disparity from a lookup table (135) according to the disparity, wherein the lookup table (135) comprises: a first pre-determined position information and a second pre-determined position information of the condenser lens, the first pre-determined disparity and the second pre-determined disparity, and a first output distance and a second output distance, wherein the first output distance is obtained by applying the principle of triangulation on the first pre-determined position information and the first pre-determined disparity, and the second output distance is obtained by applying the principle of triangulation on the second pre-determined position information and the second pre-determined disparity;

selecting one of the first pre-determined position information or the second pre-determined position information from the lookup table (135) according to the estimation of the condenser lens; and considering said one of the first output distance or the second output distance as a second distance according to the selection.

12. The method of claim 10 or 11, further comprising: determining the global compensation coefficient on the basis of the first distance and the second distance.

13. The method of claim 8, further comprising: determining the disparity by constructing a coordinate system for the image.

**Patentansprüche**

1. Ein dreidimensionales (3D) Bilderfassungssystem (10), bestehend aus:

einem Licht emittierenden Modul (110), das so konfiguriert ist, dass es einfallendes Licht (LS) an ein Zielobjekt (200) aussendet; und

einem lichtempfindlichen Modul (100), das so konfiguriert ist, dass es das vom Zielobjekt (200) reflektierte Licht (LR) des einfallenden Lichts (LS) empfängt, wobei das lichtempfindliche Modul (100) Folgendes umfasst:

eine Kondensorlinse (105), die so konfiguriert ist, dass sie das reflektierte Licht (LR) in fokussiertes reflektiertes Licht (CLR) bündelt; und
eine lichtempfindliche Anordnung (101), bestehend aus:

einem ersten lichtempfindlichen Element (310), das so konfiguriert ist, dass es das erste fokussierte reflektierte Licht (CLR1) des fokussierten reflektierten Lichts (CLR) empfängt; und
einem zweiten lichtempfindlichen Element (310), das so konfiguriert ist, dass es das zweite fokussierte reflektierte Licht (CLR2) des fokussierten reflektierten Lichts (CLR) empfängt; und

eine Verarbeitungseinheit (120), die mit dem lichtempfindlichen Modul (100) verbunden und so konfiguriert ist, dass sie eine ToF-(Time-of-Flight)-Entfernungsmessung auf der Grundlage der ToF des einfallenden Lichts (LS) und der ToF des reflektierten Lichts (LR) durchführt, um eine erste dem Zielobjekt (200) zugeordnete Entfernung zu ermitteln, wobei die erste Entfernung einen globalen Offset aufweist.
Die Verarbeitungseinheit (120) erstellt ein Bild auf der Grundlage des ersten fokussierten reflektierten Lichts (CLR1) und des zweiten fokussierten reflektierten Lichts (CLR2), schätzt eine durch das erste fokussierte reflektierte Licht (CLR1) und das zweite fokussierte reflektierte Licht (CLR2) im Bild reflektierte Disparität und berechnet einen globalen Kompensationskoeffizienten auf der Grundlage der Disparität, um den globalen Offset zu kompensieren, **dadurch gekennzeichnet,**

**dass** die lichtempfindliche Anordnung ferner Folgendes umfasst:
ein Pixelpaar zur Phasendetektion (104), bestehend aus:

einem rechtsseitig abgeschirmten Phasendetektionspixel (104R), das das erste lichtempfindliche Element (310) umfasst, wobei das rechts abgeschirmte Phasendetektionspixel (104R) so konfiguriert ist, dass es Licht von der rechten Seite des rechts abgeschirmten Phasendetektionspixels (104R) abschirmt und das erste fokussierte reflektierte Licht (CLR1) in das rechts abgeschirmte Phasendetektionspixel (104R) eintreten lässt, damit es von dem ersten lichtempfindlichen Element (310) empfangen werden kann; und
einem linksseitig abgeschirmten Phasendetektionspixel (104L), das das zweite lichtempfindliche Element (310) umfasst, wobei das links abgeschirmte Phasendetektionspixel (104L) so konfiguriert ist, dass es Licht von der linken Seite des links abgeschirmten Phasendetektionspixels (104L) abschirmt und das zweite fokussierte reflektierte Licht (CLR2) in das links abgeschirmte Phasendetektionspixel (104L) eintreten lässt, damit es von dem zweiten lichtempfindlichen Element (310) empfangen werden kann.

2. 3D-Bilderfassungssystem (10) nach Anspruch 1, wobei die Verarbeitungseinheit (120) den globalen Kompensationskoeffizienten auf der Grundlage der Disparität und der ersten Entfernung berechnet.

3. 3D-Bilderfassungssystem (10) nach Anspruch 2, das ferner Folgendes umfasst:

eine Nachschlagetabelle (135), die Folgendes umfasst: eine erste vorgegebene Disparität und eine zweite vorgegebene Disparität sowie eine erste Ausgangsentfernung und eine zweite Ausgangsentfernung, wobei die erste Ausgangsentfernung durch Anwendung des Triangulationsprinzips auf die erste vorgegebene Disparität ermittelt wird und die zweite Ausgangsentfernung durch Anwendung des Triangulationsprinzips auf die zweite vorgegebene Disparität ermittelt wird, wobei die Verarbeitungseinheit (120) ferner in Abhängigkeit der Disparität eine erste vorgegebene Disparität oder eine zweite vorgegebene Disparität aus der Nachschlagetabelle (135) auswählt und gemäß der getroffenen Auswahl die entsprechende erste oder zweite Ausgangsentfernung als zweite Entfernung berücksichtigt.

4. 3D-Bilderfassungssystem (10) nach Anspruch 2, das ferner Folgendes umfasst:
eine Nachschlagetabelle (135), die Folgendes umfasst: eine erste vorgegebene Positionsinformation und eine zweite vorgegebene Positionsinformation der Kondensorlinse, eine erste vorgegebene Disparität und eine zweite vorgegebene Disparität sowie eine erste Ausgangsentfernung und eine zweite Ausgangsentfernung, wobei die erste Ausgangsentfernung durch Anwendung des Triangulationsprinzips auf die erste vorgegebene Positionsinformation und auf die erste vorgegebene Disparität ermittelt wird und die zweite Ausgangsentfernung durch Anwendung des Triangulationsprinzips auf die zweite vorgegebene Positionsinformation und auf die zweite vorgegebene Disparität ermittelt wird, wobei die Verarbeitungseinheit (120) ferner in Abhängigkeit einer geschätzten Positionsinformation der Disparität und der Kondensorlinse eine erste vorgegebene Disparität oder eine zweite vorgegebene Disparität aus der Nachschlagetabelle (135) auswählt und eine erste vorgegebene Positionsinformation oder eine zweite vorgegebene Positionsinformation aus der Nachschlagetabelle (135) auswählt und gemäß der getroffenen Auswahl die entsprechende erste oder zweite Ausgangsentfernung als zweite Entfernung berücksichtigt.

5.  3D-Bilderfassungssystem (10) nach Anspruch 3 oder 4, wobei die Verarbeitungseinheit (120) ferner den globalen Kompensationskoeffizienten auf der Grundlage der ersten Entfernung und der zweiten Entfernung vorgibt.

6.  3D-Bilderfassungssystem (10) nach Anspruch 1, wobei die Verarbeitungseinheit (120) die Disparität vorgibt, indem sie ein Koordinatensystem für das Bild konstruiert.

7.  Ein elektronisches Gerät (60), das Folgendes umfasst: ein dreidimensionales Bilderfassungssystem nach einem der Ansprüche 1 bis 6.

8.  Ein ToF-(Time-of-Flight)-Entfernungsmessverfahren, das Folgendes umfasst:

    Aussenden von einfallendem Licht (LS) auf ein Zielobjekt (200);
    Empfangen des vom Zielobjekt (200) reflektierten Lichts (LR) des einfallenden Lichts (LS);
    Verwenden einer Kondensorlinse (105), um das reflektierte Licht (LR) in fokussiertes reflektiertes Licht zu bündeln;
    Verwenden eines ersten lichtempfindlichen Elements (310), um das erste fokussierte reflektierte Licht (CLR1) des fokussierten reflektierten Lichts (CLR) zu empfangen; und
    Verwenden eines zweiten lichtempfindlichen Elements (310), um das zweite fokussierte reflektierte Licht (CLR2) des fokussierten reflektierten Lichts (CLR) zu empfangen;
    Durchführen einer ToF-Entfernungsmessung auf der Grundlage der ToF des einfallenden Lichts (LS) und der ToF des reflektierten Lichts (LR), um eine erste dem Zielobjekt (200) zugeordnete Entfernung zu ermitteln, wobei die erste Entfernung einen globalen Offset aufweist;
    Erstellen eines Bildes auf der Grundlage des ersten fokussierten reflektierten Lichts (CLR1) und des zweiten fokussierten reflektierten Lichts (CLR2);
    Schätzen einer Disparität, die vom ersten fokussierten reflektierten Licht (CLR1) und dem zweiten fokussierten reflektierten Licht (CLR2) im Bild reflektiert wird; und
    Berechnen eines globalen Kompensationskoeffizienten auf der Grundlage der Disparität, um den globalen Offset zu kompensieren:

        wobei das erste lichtempfindliche Element (310) in einem rechts abgeschirmten Phasendetektionspixel (104R) angeordnet ist und das zweite lichtempfindliche Element (310) in einem links abgeschirmten Phasendetektionspixel (104L) angeordnet ist,
        wobei das Empfangen des ersten fokussierten reflektierten Lichts (CLR1) des fokussierten reflektierten Lichts (CLR) unter Verwendung des ersten lichtempfindlichen Elements (310) Folgendes umfasst:
        Verwendung des rechts abgeschirmten Phasendetektionspixels (104R), um Licht von der rechten Seite des rechts abgeschirmten Phasendetektionspixels (104R) abzuschirmen, damit das erste fokussierte reflektierte Licht (CLR1) in das rechts abgeschirmte Phasendetektionspixel (104R) eintreten kann, und Verwendung des ersten lichtempfindlichen Elements (310), um das erste fokussierte reflektierte Licht (CLR1) zu empfangen;
        wobei das Empfangen des zweiten fokussierten reflektierten Lichts (CLR2) des fokussierten reflektierten Lichts (CLR) unter Verwendung des zweiten lichtempfindlichen Elements (310) Folgendes umfasst:
        Verwendung des links abgeschirmten Phasendetektionspixels (104L), um Licht von der linken Seite des links abgeschirmten Phasendetektionspixels (104L) abzuschirmen, damit das zweite fokussierte reflektierte Licht (CLR2) in das links abgeschirmte Phasendetektionspixel (104L) eintreten kann, und Verwendung des zweiten lichtempfindlichen Elements (310), um das zweite fokussierte reflektierte Licht (CLR2) zu empfangen;

9.  Verfahren nach Anspruch 8, wobei die Berechnung des globalen Kompensationskoeffizienten auf der Grundlage der Disparität Folgendes umfasst: Berechnung des globalen Kompensationskoeffizienten auf der Grundlage der Disparität und der ersten Entfernung.

10. Verfahren nach Anspruch 9, das ferner Folgendes umfasst:

    Auswahl einer ersten vorgegebenen Disparität oder einer zweiten vorgegebenen Disparität aus einer Nachschlagetabelle (135) in Abhängigkeit von der Disparität, wobei die Nachschlagetabelle (135) Folgendes umfasst: Die erste vorgegebene Disparität und die zweite vorgegebene Disparität, eine erste Ausgangsentfernung und eine zweite Ausgangsentfernung, wobei die erste Ausgangsentfernung durch Anwendung des Triangulationsprinzips auf die erste vorgegebene Disparität ermittelt wird und die zweite Ausgangsentfernung durch Anwendung des Triangulationsprinzips auf die zweite vorgegebene Disparität ermittelt wird; und Berücksichtigung der entsprechenden ersten oder zweiten Ausgangsentfernung als zweite Entfernung gemäß der getroffenen Auswahl.

11. Verfahren nach Anspruch 9, wobei

eine erste vorgegebene Disparität oder eine zweite vorgegebene Disparität aus einer Nachschlagetabelle (135) in Abhängigkeit von der Disparität ausgewählt wird, wobei die Nachschlagetabelle (135) Folgendes umfasst: eine erste vorgegebene Positionsinformation und eine zweite vorgegebene Positionsinformation der Kondensorlinse, die erste vorgegebene Disparität und die zweite vorgegebene Disparität, eine erste Ausgangsentfernung und eine zweite Ausgangsentfernung, wobei die erste Ausgangsentfernung durch Anwenden des Triangulationsprinzips auf die erste vorgegebene Disparität ermittelt wird und die zweite Ausgangsentfernung durch Anwenden des Triangulationsprinzips auf die zweite vorgegebene Positionsinformation und die zweite vorgegebene Disparität ermittelt wird;
Auswahl einer ersten vorgegebenen Positionsinformation oder einer zweiten vorgegebenen Positionsinformation aus der Nachschlagetabelle (135), in Abhängigkeit von der Schätzung der Kondensorlinse; und Berücksichtigung der entsprechenden ersten oder zweiten Ausgangsentfernung als zweite Entfernung in Abhängigkeit von der getroffenen Auswahl.

12. Verfahren nach Anspruch 10 oder 11, das ferner Folgendes umfasst:
Bestimmung des globalen Kompensationskoeffizienten auf der Grundlage der ersten und der zweiten Entfernung.

13. Verfahren nach Anspruch 8, das ferner Folgendes umfasst:
Bestimmung der Disparität durch Konstruktion eines Koordinatensystems für das Bild.

**Revendications**

1. Système de détection d'image tridimensionnelle (3D) (10), comprenant :

un module d'émission lumineuse (110), configuré pour émettre une lumière incidente (LS) vers un objet cible (200) ; et
un module photosensible (100), configuré pour recevoir une lumière réfléchie (LR) de la lumière incidente (LS) après sa réflexion sur l'objet cible (200), le module photosensible (100) comprenant :

une lentille de convergence (105), configurée pour focaliser la lumière réfléchie (LR) en une lumière réfléchie focalisée (CLR) ; et
un réseau photosensible (101), comprenant :

un premier élément photosensible (310), configuré pour recevoir une première lumière réfléchie focalisée (CLR1) issue de la lumière réfléchie focalisée (CLR) ; et
un second élément photosensible (310), configuré pour recevoir une seconde lumière réfléchie focalisée (CLR2) issue de la lumière réfléchie focalisée (CLR) ; et

une unité de traitement (120), couplée au module photosensible (100), configurée pour effectuer une mesure de distance par temps de vol (ToF), sur la base du temps de vol de la lumière incidente (LS) et du temps de vol de la lumière réfléchie (LR), afin d'obtenir une première distance correspondant à l'objet cible (200), cette première distance présentant un décalage global,
l'unité de traitement (120) établit une image sur la base de la première lumière réfléchie focalisée (CLR1) et de la seconde lumière réfléchie focalisée (CLR2), estime une disparité reflétée par la première lumière réfléchie focalisée (CLR1) et la seconde lumière réfléchie focalisée (CLR2) dans l'image, et calcule un coefficient de compensation global sur la base de la disparité afin de compenser le décalage global, **caractérisé en ce que** le réseau photosensible comprend en outre :
une paire de pixels de détection de phase (104), comprenant :

un pixel de détection de phase masqué à droite (104R), comprenant le premier élément photosensible (310), ledit pixel de détection de phase masqué à droite (104R) étant configuré pour bloquer la lumière provenant du côté droit du pixel de détection de phase masqué à droite (104R), et pour permettre à la première lumière réfléchie focalisée (CLR1) d'entrer dans le pixel de détection de phase masqué à droite (104R) et d'être reçue par le premier élément photosensible (310) ; et

un pixel de détection de phase masqué à gauche (104L), comprenant le second élément photosensible (310), ledit pixel de détection de phase masqué à gauche (104L) étant configuré pour bloquer la lumière provenant du côté gauche du pixel de détection de phase masqué à gauche (104L), et pour permettre à la seconde lumière réfléchie focalisée (CLR2) d'entrer dans le pixel de détection de phase masqué à gauche (104L) et d'être reçue par le second élément photosensible (310).

2. Système de détection d'image 3D (10) selon la revendication 1, dans lequel l'unité de traitement (120) calcule le coefficient de compensation global sur la base de la disparité et de la première distance.

3. Système de détection d'image 3D (10) selon la revendication 2, comprenant en outre :

une table de correspondance (135), comprenant une première disparité prédéterminée et une seconde disparité prédéterminée, ainsi qu'une première distance de sortie et une seconde distance de sortie, la première distance de sortie étant obtenue par application du principe de triangulation à la première disparité prédéterminée, et la seconde distance de sortie étant obtenue par application du principe de triangulation à la seconde disparité prédéterminée, dans lequel l'unité de traitement (120) sélectionne en outre l'une parmi la première disparité prédéterminée ou la seconde disparité prédéterminée dans la table de correspondance (135) en fonction de la disparité, et considère la première distance de sortie ou la seconde distance de sortie comme une seconde distance selon la sélection effectuée.

4. Système de détection d'image 3D (10) selon la revendication 2, comprenant en outre :

une table de correspondance (135), comprenant une première information de position prédéterminée et une seconde information de position prédéterminée de la lentille de convergence, une première disparité prédéterminée et une seconde disparité prédéterminée, ainsi qu'une première distance de sortie et une seconde distance de sortie, la première distance de sortie étant obtenue par application du principe de triangulation à la première information de position prédéterminée et à la première disparité prédéterminée, et la seconde distance de sortie étant obtenue par application du principe de triangulation à la seconde information de position prédéterminée et à la seconde disparité prédéterminée, l'unité de traitement (120) sélectionne en outre l'une parmi la première disparité prédéterminée ou la seconde disparité prédéterminée dans la table de correspondance (135), en fonction d'une information de position estimée concernant la disparité et la lentille de convergence, et sélectionne l'une parmi la première information de position prédéterminée ou la seconde information de position prédéterminée dans la table de correspondance (135), et considère la première distance de sortie ou la seconde distance de sortie comme une seconde distance selon la sélection effectuée.

5. Système de détection d'image 3D (10) selon la revendication 3 ou 4, dans lequel l'unité de traitement (120) détermine en outre le coefficient de compensation global sur la base de la première distance et de la seconde distance.

6. Système de détection d'image 3D (10) selon la revendication 1, dans lequel l'unité de traitement (120) détermine la disparité en construisant un système de coordonnées pour l'image.

7. Dispositif électronique (60), comprenant un système de détection d'image tridimensionnelle selon l'une quelconque des revendications 1 à 6.

8. Procédé de télémétrie par temps de vol (ToF), comprenant :

l'émission d'une lumière incidente (LS) vers un objet cible (200) ;
la réception d'une lumière réfléchie (LR) issue de la lumière incidente (LS) après réflexion sur l'objet cible (200) ;
l'utilisation d'une lentille de convergence (105) pour focaliser la lumière réfléchie (LR) en une lumière réfléchie focalisée ;
l'utilisation d'un premier élément photosensible (310) pour recevoir une première lumière réfléchie focalisée (CLR1) issue de la lumière réfléchie focalisée (CLR) ; et
l'utilisation d'un second élément photosensible (310) pour recevoir une seconde lumière réfléchie focalisée (CLR2) issue de la lumière réfléchie focalisée (CLR) ;

la réalisation d'une mesure de distance par temps de vol (ToF) en fonction du ToF de la lumière incidente (LS) et du ToF de la lumière réfléchie (LR), afin d'obtenir une première distance correspondant à l'objet cible (200), cette première distance présentant un décalage global;

l'établissement d'une image à partir de la première lumière réfléchie focalisée (CLR1) et de la seconde lumière réfléchie focalisée (CLR2) ;

l'estimation d'une disparité reflétée par la première lumière réfléchie focalisée (CLR1) et la seconde lumière réfléchie focalisée (CLR2) dans l'image ; et

le calcul d'un coefficient de compensation global à partir de la disparité, afin de compenser le décalage global **caractérisé en ce que** :

le premier élément photosensible (310) est disposé dans un pixel de détection de phase masqué à droite (104R), et le second élément photosensible (310) est disposé dans un pixel de détection de phase masqué à gauche (104L),

la réception de la première lumière réfléchie focalisée (CLR1) au moyen du premier élément photosensible (310) comprend :

l'utilisation du pixel de détection de phase masqué à droite (104R) pour bloquer la lumière provenant du côté droit du pixel de détection de phase masqué à droite (104R), afin de permettre à la première lumière réfléchie focalisée (CLR1) d'entrer dans le pixel de détection de phase masqué à droite (104R), et l'utilisation du premier élément photosensible (310) pour recevoir la première lumière réfléchie focalisée (CLR1) ;

la réception de la seconde lumière réfléchie focalisée (CLR2) au moyen du second élément photosensible (310) comprend :

l'utilisation du pixel de détection de phase masqué à gauche (104L) pour bloquer la lumière provenant du côté gauche du pixel de détection de phase masqué à gauche (104L), afin de permettre à la seconde lumière réfléchie focalisée (CLR2) d'entrer dans le pixel de détection de phase masqué à gauche (104L), et l'utilisation du second élément photosensible (310) pour recevoir la seconde lumière réfléchie focalisée (CLR2).

9.  Procédé selon la revendication 8, dans lequel le calcul du coefficient de compensation global sur la base de la disparité comprend : le calcul du coefficient de compensation global sur la base de la disparité et de la première distance.

10.  Procédé selon la revendication 9, comprenant :

la sélection de l'une parmi une première disparité prédéterminée ou une seconde disparité prédéterminée à partir d'une table de correspondance (135) en fonction de la disparité,

la table de correspondance (135) comprenant la première disparité prédéterminée et la seconde disparité prédéterminée, ainsi qu'une première distance de sortie et une seconde distance de sortie, la première distance de sortie étant obtenue par application du principe de triangulation à la première disparité prédéterminée, et la seconde distance de sortie étant obtenue par application du principe de triangulation à la seconde disparité prédéterminée ; et

la considération, selon la sélection, de l'une parmi la première distance de sortie ou la seconde distance de sortie comme une seconde distance.

11.  Procédé selon la revendication 9, dans lequel :

la sélection de l'une parmi une première disparité prédéterminée ou une seconde disparité prédéterminée à partir d'une table de correspondance (135) est effectuée en fonction de la disparité, la table de correspondance (135) comprenant : une première information de position prédéterminée et une seconde information de position prédéterminée de la lentille de convergence, la première disparité prédéterminée et la seconde disparité prédéterminée, ainsi qu'une première distance de sortie et une seconde distance de sortie, la première distance de sortie étant obtenue par application du principe de triangulation à la première information de position prédéterminée et à la première disparité prédéterminée, et la seconde distance de sortie étant obtenue par application du principe de triangulation à la seconde information de position prédéterminée et à la seconde disparité prédéterminée ;

la sélection de l'une parmi la première information de position prédéterminée ou la seconde information de position prédéterminée à partir de la table de correspondance (135), en fonction de l'estimation de la lentille de convergence ; et

la considération, selon la sélection, de l'une parmi la première distance de sortie ou la seconde distance de sortie comme une seconde distance.

12. Procédé selon la revendication 10 ou 11, comprenant en outre :
la détermination du coefficient de compensation global sur la base de la première distance et de la seconde distance.

13. Procédé selon la revendication 8, comprenant en outre :
la détermination de la disparité par construction d'un système de coordonnées pour l'image.

FIG. 1

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 112017007344
- US 2019339369 A
- EP 3015881 A